# EUROPEAN PATENT SPECIFICATION

(11) **EP 3 931 047 B1**
(45) Date of publication and mention of the grant of the patent: **22.03.2023**
(21) Application number: 20705681.3
(22) Date of filing: 14.02.2020
(51) Int. Cl.: B60R 9/04, B60P 7/16, B60D 1/24

(54) **SECURITY ARRANGEMENT FOR A LOAD CARRYING, LOAD PULLING, LOAD PUSHING OR LOAD STOPPING ASSEMBLY**
SICHERHEITSANORDNUNG FÜR LASTTRAGEN, LASTZIEHEN, LASTDRÜCKEN ODER LASTSTOPPEN
AGENCEMENT DE SÉCURITÉ POUR UN ENSEMBLE DE SUPPORT DE CHARGE, DE TIRAGE DE CHARGE, DE POUSSAGE DE CHARGE OU D'ARRÊT DE CHARGE

(30) Priority: 28.02.2019 SE 1950259
(43) Date of publication of application: 05.01.2022
(73) Proprietor: MIM Construction AB, 461 38 Trollhättan (SE)
(72) Inventor: BJÖRNETUN, Mats, 462 94 Frändefors (SE)
(74) Representative: Bjerkén Hynell KB
(86) International application number: PCT/EP2020/053919
(87) International publication number: WO 2020/173721

(56) References cited:
- US-A- 3 950 011
- US-A- 4 078 636
- US-A1- 2007 262 564

## Description

### TECHINICAL FIELD

This invention relates to a security arrangement for a load carrying, load pulling, load pushing or load stopping assembly connected to a vehicle, comprising an energy absorbing function to reduce the risk of hazard in connection with a vehicle suddenly decelerating, e.g. crashing, that carries a load, e.g. a roof rack with a roof box.

### BACKGROUND

There exist many situations where a load carried by a vehicle may cause damages upon sudden deceleration, e.g. when a vehicle is crashing. Due to the high energy that has been gained by the load due to the speed sudden deceleration may cause attachment members between the vehicle and the assembly carrying the to break, e.g. disrupt, which may cause severe damages. One typical example that may be referred to is a car having a roof box carried on top of a roof rack.

Severe disasters have been caused by heavy loads on roof racks that in connection with sudden deceleration of vehicles, e.g. crash, have loosened from their attachments to the roof rack. For instance, roof boxes have been causing disasters in this manner. As is well known, roof boxes may enclose a very large volume and accordingly it is possible to put a lot of load into a roof box. In connection with a crash, or other sudden deceleration, there is a risk that the attachment members keeping the roof box in place on the roof rack may be over-strained and rupture. In such a situation the roof box will continue to travel at high speeds along an uncontrolled trajectory, thereby risking to destroy and/or injure objects and/or people within that trajectory.

From WO2008/076037 there is known an arrangement intended to minimize the above risk, which is based on a specifically designed attachment between a holder of a roof rack and a bracket attached onto the roof of the vehicle. However, such an arrangement does not eliminate or reduce the risk that at large impact the attachment devices keeping the load e.g. roof box, onto the roof rack may rupture.

From DE4028433 and DE102015113689 it is known to supplement a roof rack assembly with energy absorbing devices in order to reduce hazard upon sudden deceleration. However, these designs present some essential disadvantages. One major disadvantage is that the energy absorbing device is complicated to install and is of need of specifically designed inter-fitting details. An example of a security arrangement for a load pulling assembly in the form of an energy-absorbing trailer hitch receiver is disclosed in US 2007/0262564 A1.

### SUMMARY OF THE INVENTION

It is an object of the invention to eliminate or at least reduce the above-mentioned problem which is achieved in accordance with a solution as defined in claim 1.

Thanks to the invention there is provided an energy absorbing means for a load carrying, load pulling, load pushing or load stopping assembly that is connected to a vehicle, which may eliminate disastrous consequences in connection with sudden decelerations, e.g. crashes, and which may easily be installed in a flexible manner in various assemblies and easily maintained.

In one application it may relate to a load carrying assembly on a vehicle carrying a load in the form of a roof box, or similar device, which will absorb energy in a controlled manner at impact which in turn will decrease the strain excerpted on, or applied to, the attachment devices between the load and the vehicle. Accordingly, the risk of rupture of the attachment is thereby significantly reduced, which may save lives and eliminate or decrease possible damages.

In another application it may relate to a load pulling assembly connected to a vehicle, wherein the security arrangement according to the invention may eliminate a rupture of the coupling between the load pulling vehicle and the load that is pulled, e.g. in the form of a trailer, wherein e.g. the vehicle is arranged with a tow bar. Preferably the load pulling assembly comprises a bar structure that is securely fixed to the pulling vehicle, wherein the security arrangement is connected in between the bar structure and the actual coupling part, e.g. towing ball.

In another application according to the invention it may relate to a vehicle pushing a load wherein the security arrangement may eliminate rupture between a coupling between the pushing vehicle and the pushed load, e.g. a train pushing a wagon.

In another application it may relate to a vehicle in the form of a moveable device in a machine which is arranged with a load stop assembly, wherein the security arrangement may eliminate rupture of the attachment between the ground and the stop member of the machine.

The basic principle of the solution according to the invention includes the use of two plates guided in the longitudinal direction of the vehicle. The guidance of the two plates is such that movement preferably is nearly impossible in the longitudinal direction, i.e. a relative movement between the plates in the longitudinal direction. The two plates are interconnected by means of an energy absorbing member, preferably the energy absorbing member is such that it will not allow any substantial relative movement between the plates at a force below a predetermined level, at a force above said predetermined level the energy absorbing member will be deformed, preferably prolonged, and as a consequence of the force acting there upon due to the deceleration force and preferably at least a portion of the energy will be transformed to permanent deformation of said energy absorbing member. In this manner, a predetermined relative movement, such as a maximal prolongation of the energy absorbing member, between the two plates may be achieved. In a preferred embodiment the energy absorbing member is made of a ductile material, e.g. a metal shaped to enable deformation parallelly with the longitudinal direction, i.e. enable prolongation in said longitudinal direction according to some examples.

Even more preferred the energy absorbing member may be replaced by a new member after having been prolonged.

According to further aspects of the invention:
- said interconnected guiding members (11/12, 20/21) include protruding parts (11,20), preferably rib shaped, which form a gap (G) between the plate shaped parts of said plates (1, 2) that provides space for said energy absorbing member (3), which provides the advantage that the energy absorbing member may be contained in between the plates without any clamping forces acting thereon from any of the plates.
- said energy absorbing member (3) is in the form of a shaped body that may be prolonged in connection with exercise of a force (Fₘₐₓ), or application of the force, onto the carrier plate (1) that exceeds the predetermined level, which provides the advantage that the energy absorbing member will be unaffected in connection with a small force, i.e. the small force is smaller than the predetermined level, acting thereon, wherein preferably said absorbing member (3) includes at least one S-shaped part, more preferred a plurality of S-shaped parts connected to each other along said longitudinal direction (C).
- the maximal prolongation (ΔLₘₐₓ) of said body (3) from its nominal length (L₀) to a maximum (Lₘₐₓ) is at least 50% of said nominal length (L₀), preferably at least 100% of said nominal length (L₀), more preferred at least 150% of said nominal length (L₀), which provides the advantage that energy may be absorbed in a gentle manner, wherein preferably more than 50% of the energy being absorbed is ductile, i.e. in the form of permanent deformation of said energy absorbing member, and more preferred said body is shaped to have an increasing energy absorbing effect during prolongation.
- at least, the main part of the energy absorbing member (3) is positioned between the two pairs of parallelly arranged ribs (11, 20), in a longitudinal channel space formed between the pairs of ribs (11, 20), which provides the advantage that the energy absorbing member may be kept in a protected manner, synergistically by means of the guiding members, wherein preferably the height (g) of said channel space is smaller than the gap (G) between said plates (1, 2).

Further aspects and details of the invention will become apparent from the following detailed description.

### BRIEF DESCRIPTION OF THE DRAWINGS

In the following the invention will be described in more detail with reference to the enclosed figures, wherein;
Figure 1 shows a schematic view of a vehicle with a roof rack carrying a roof box, and wherein a security assembly according to the invention, in a perspective view,
Figure 2 shows the assembly according to the invention in a perspective view,
Figure 3 shows the assembly according to the invention in a side view,
Figure 4 shows a further embodiment of the assembly according to the invention in a perspective view,
Figure 5 shows a perspective view of further alternative embodiments of the safety arrangement according to the invention,
Figure 6 is the same view as shown in figure 5 wherein the upper plate has been removed, and,
Figure 7 shows a side view of the device of figures 5 and 6 along a longitudinal direction of the safety arrangement.

### DETAILED DESCRIPTION

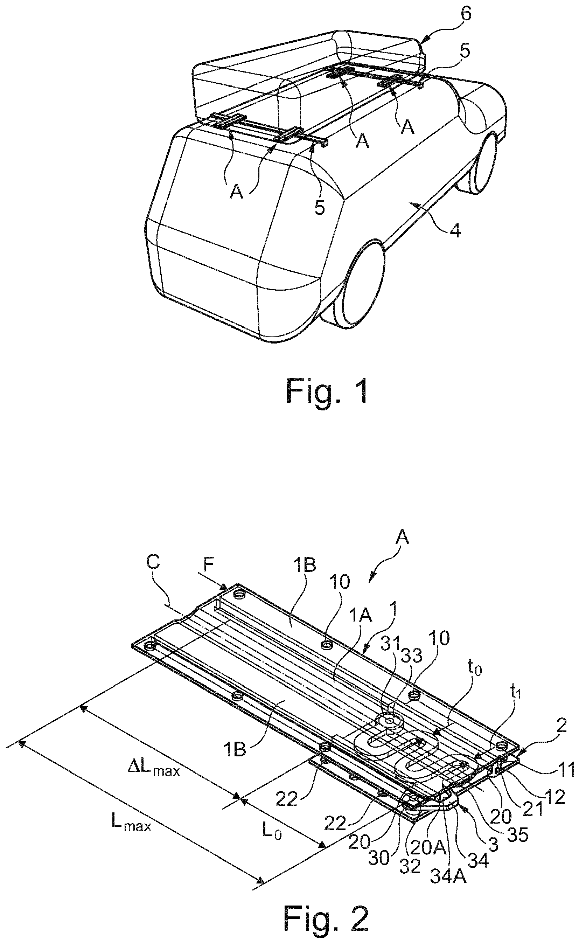

In figure 1 there is shown a schematic view of a vehicle 4 with a roof rack carrying a roof box 6, and wherein four security arrangements A according to the invention are arranged between the roof box 6 and the roof rack, i.e. two on the front roof rack bar and two on the rear roof rack bar, forming a load carrying assembly 5. It is foreseen that instead of two, merely one single unit may be used at the front and rear, respectively and indeed even merely one single unit for all of it.

The security arrangements A are adapted to secure e.g. a roof box 6 to e.g. a roof rack, forming a load carrying assembly 5. Generally, a security arrangement A may be seen as an attachment arrangement A for attaching a device for carrying a load by a vehicle 4, preferably attached to the roof or part of the roof of a vehicle 4, e.g. a roof rack attached to roof rails of the vehicle, wherein the security arrangement A is arranged between roof rack and a load 6 carried by the roof rack. However, it may also fulfil the same basic function in other applications.

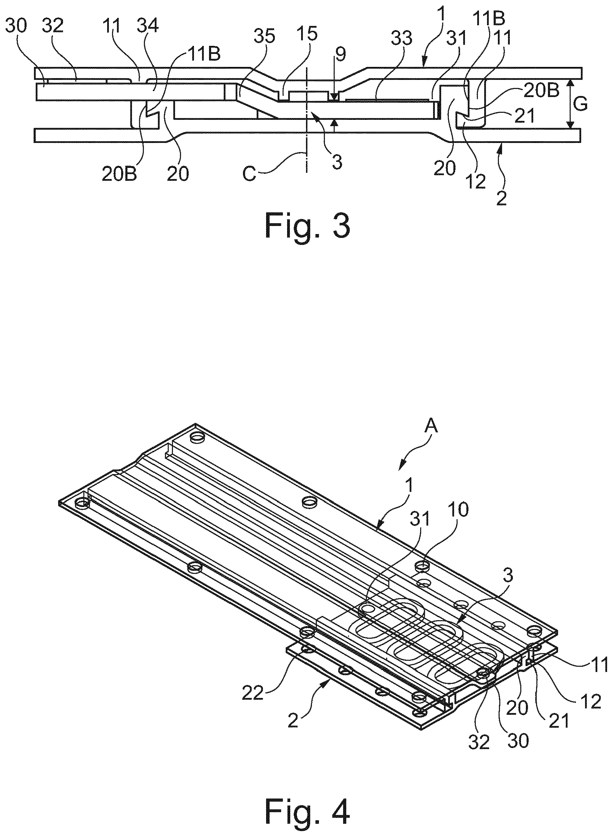

In figures 2 and 3 there are shown different perspective views of an embodiment of the security arrangement A according to the invention. The security arrangement A comprises a carrier plate 1, an attachment plate 2 and an energy absorbing member 3 in between the two plates 1,2. The plates 1,2 are interconnected by means of guiding members 11, 12, 20, 21 which enable the plates 1,2 to merely be moveable relative to each other in a longitudinal direction C, which longitudinal direction C coincides with the longitudinal direction of a vehicle, i.e. the direction of travel of the vehicle. This may mean that the guiding members 11, 12, 20, 21 may be arranged to enable relative movement, or relative displacement, between the carrier plate 1 and the attachment plate 2, e.g. solely parallelly with the longitudinal direction C. The carrier plate 1 is arranged with attachment devices 10 for attachment of the carrier plate 1 to a roof box, a rooftop cargo carrier or similar load carrying device. The attachment plate 2 is arranged with attachment devices 22 for attachment of the attachment plate 2 to a bar of a roof rack, which together forms an assembly 5 together with a load 6 on the roof rack. The energy absorbing member 3 that is arranged having a meandering shape, such as an S-shape, shape of digit eight or the like, in between the two plates 1,2 having a first attachment device 30,32 for attachment of one end thereof to the carrier plate 1 and a second attachment device 31, 33 for attachment thereof to the attachment plate 2.

The guiding members 11, 12, 20, 21 are in the form of two pairs of parallelly arranged ribs 11, 20, one pair on each of the plates 1,2 facing each other, thereby providing a gap G (see Fig 3) between the plates 1,2. Two of the ribs 11, 20, preferably one pair of the ribs 11 of one plate 1, are arranged with perpendicular protrusions 12 that fits in to corresponding recesses 21 in each of the ribs 11 of the other plate 1. In this manner opposing and parallel walls 11B, 20B of the ribs 11, 20 will prevent any relative movement between the plates 1,2 in a main plane of the security arrangement A and perpendicularly to the longitudinal direction C. Furthermore, the protrusions 12 and recesses 21 will prevent movement in a plane perpendicular to the main plane being parallel to second transversal direction relatively the longitudinal direction C. Accordingly, relative movement of the plates 1,2 may merely occur in the longitudinal direction C. This means that the relative movement may for example solely occur in the longitudinal direction C, e.g. when the vehicle 4 decelerates.

Accordingly, the energy absorbing member 3 is in the form of a body, preferably specifically shaped to include curved portions that will be straightened by a force F acting in the longitudinal direction, that may be prolonged, and at least partially permanently deformed/prolonged, in connection with exercise of a force F onto the carrier plate 1 that exceeds a predetermined level. However, the security arrangement A (including a fully extended (or shortened) energy absorbing member 3), will be designed to withstand substantially higher forces, without any rupture, once the security arrangement A has absorbed the intended/predetermined maximal energy, i.e. after having relatively softly decelerated the load on the vehicle roof.

Preferably the shape of the energy absorbing member 3 is such that the relative movement between the plates 1,2 may only reach a maximal prolongation ΔLₘₐₓ %= 100 × (Lₘₐₓ₋ L₀) / L₀) of said absorbing member 3 from its nominal length L₀, (e.g. 50-150 mm) to a maximum length Lₘₐₓ, wherein ΔLₘₐₓ is at least 50%, preferably at least 100%, more preferred at least 150%. In the shown embodiment of Figs 2 and 3 the meandering/multi-S shaped energy absorbing member 3 may be prolonged from a nominal length L₀, e.g. of about 100 mm to a maximal prolongation ΔLₘₐₓ of about 200 %, i.e. a maximum length Lₘₐₓ of about 300 mm. Further, as shown in Figs 2 and 3 the meandering/multi-S shaped energy absorbing member 3 may have a body shaped to have an increasing energy absorbing effect during prolongation, e.g. by means of having a continuously increasing cross-sectional area of the body, preferably by means of having an increasing width (t2>t1) from one end to the other. As a result, it will require a first level of force F1 (e.g. above 1000 N, or more preferred above 1400 N) to straighten out the first bend having the smallest width t1, a higher a second level (e.g. + 10-30 %) of force F2 to straighten out the second bend having a larger width t2, etc.

As an alternative to prolongation it is foreseen that the predetermined relative movement may instead comprise of said energy absorbing member 3, e.g. a maximal shortening of said absorbing member 3 from its nominal length L₀ to a minimum (Lₘᵢₙ) that is at most 90%, preferably at most 50%. Also, in connection with shortening the energy absorbing member 3 may be designed to have an increasing energy absorbing effect during shortening. For example, such a body may be made of a metallic foam, wherein the foam structure is varied to achieve a progressive effect, or the foam structure is the same, but the shape is varied to achieve a progressive effect.

In the preferred embodiment the main part of the energy absorbing member 3 is positioned between the two pairs of parallelly arranged ribs 11, 20, in a longitudinal channel space formed between the pairs of ribs 11, 20. The height g of said channel space may be smaller than the gap G between said plates (1, 2).

In the preferred embodiment, shown in Fig 2 and 3 the attachment device 30,32 for attaching the energy absorbing member 3 to the carrier plate 1 is positioned besides the channel portion 1A of the carrier plate, i.e. in a side portion 1B. As a consequence, a portion 34 of the energy absorbing member 3 will extend transversally from the side portion 1B into the channel space. Hereby it is achieved that a longer (than if attached centrally) energy absorbing member 3 may be provided and that a surface 34A of that portion 34 may be arranged to abut an end surface 20A of one of said ribs 20, which may provide a definite stop of the carrier plate 1, in the reverse, compressing direction, e.g. it may hinder the carrier plate 1 (with load, e.g. roof box) to move due to air resistance at high speed. Alternate embodiments to provide such a definite stop are foreseen, e.g. to use a break pin or similar device (not shown) that fixates the plates 1,2 relative each other up to a predetermined Force, F_{break} (e.g. 500 N), that is above the force acting on the load (e.g. roof box) due to air resistance.

Preferably the energy absorbing member 3 is made in a material and dimensions that makes is substantially stiff during normal use, implying that during normal use of an assembly according to the invention there will be no movement within the safety arrangement A. Hence no disturbing oscillations or movements that may cause disadvantages. However, in order to safeguard that no movement occurs during normal use the inventive concept may also comprise the use of a limit rupture device, e.g. break pin. The limit rupture function is such that it can resist forces up to a certain level/limit where after it breaks. One example of such a force limit rupture device may be in the form of a pin that is introduced into a through hole, e.g. a bore passing through both plates, preferably at a side edge, where they overlap. The pin will be of a material and have such a dimension that it breaks at a desired/predetermined level of force, where after the energy absorbing member 3 will start taking over the function to absorb energy.

In Fig. 4 there is shown a second embodiment of an energy absorbing member 3, wherein the shape is in the form of connected rings, e.g. oval shaped rings, that are connected centrally along the longitudinal lien C to each other, providing a symmetry line, such that during prolongation evenly distribution of forces in each ring half will occur.

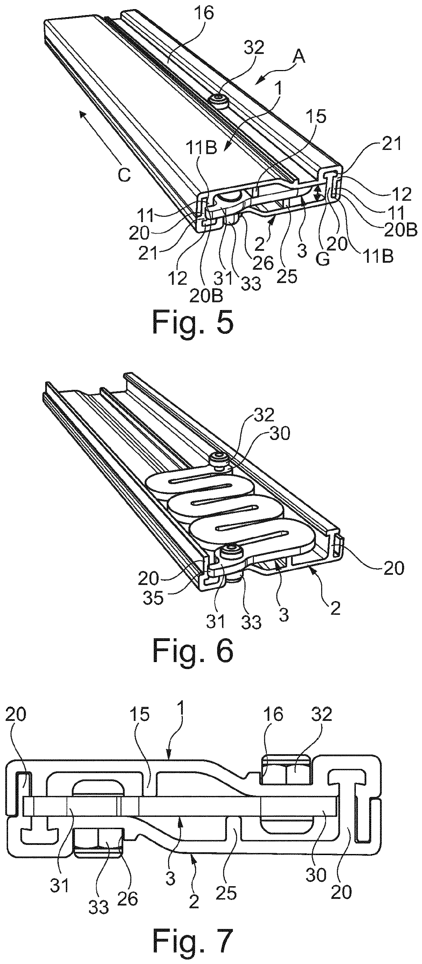

In figs 5, 6 and 7 there is shown a third embodiment of the invention, which may be suitable to use in an application relating to a load pulling assembly connected to a vehicle, wherein the security arrangement A according to the invention may eliminate a rupture of the coupling between the load pulling vehicle and the load that is pulled, e.g. in the form of a lorry arranged with a tow bar for a trailer. Preferably the load pulling assembly comprises a bar structure (not shown) that is securely fixed to the pulling vehicle, the security arrangement A being fixed with one part, e.g. the carrier plate 1, to the bar structure and the other part 2, e.g. the attachment plate 2, to the coupling member, e.g. tow ball, of the tow bar, such that energy may be absorbed by the energy absorbing member 3 if needed to avoid a sudden stop, possibly otherwise resulting in rupture of the tow bar.

It is foreseen that the security arrangement according to the invention may also be used for an assembly having a vehicle pushing a load wherein the security arrangement may eliminate rupture between a coupling between the pushing vehicle and the pushed load, e.g. a train pushing a wagon.

Further it is foreseen that in another application it may relate to a vehicle in the form of a moveable device in a machine which is arranged with a load stop assembly, wherein the security arrangement may eliminate rupture of the attachment between the ground and the stop member of the machine.

It is evident for the skilled person that the invention is not limited to what is described above but may be varied within the scope of the claims. For instance, the skilled person realizes that there are many kinds of energy absorbing members 3, or energy absorbing withholding devices, that may be used to fulfil the basic function of the invention, e.g. foam like bodies, pistons (active or passive), etc and that compression may be used instead of prolongation. The energy absorbing member 3 may be made of a at least partially plastically formable material, such as a metal, a foam or the like. Further, it is evident that the basic function of the invention may also be fulfilled if the energy absorbing members 3 is positioned elsewhere than in between the plates 1,2. Preferably, the plates have a cross-sectional shape that allows using extrusion for production thereof, but of course various shapes are possible to fulfil the basic function of the invention. For instance, it is evident that the plates 1,2, need not be planar but may be curved, in various manners, e.g. to be more or less tubular. Hence, the expression plate must be given a broad interpretation. Moreover, it is foreseen that the carrier plate 1 may be positioned below the attachment plate 2, if using an upwardly extending roof rack where the load is positioned in a space between the roof rack bar and the roof of the vehicle. Moreover, it is evident that the basic principles of the invention may also be used in connection with other loads than on top of the roof of a vehicle and in connection with other vehicles than cars, e.g. load carrying assemblies 5 on a flat bed of a truck or rail wagon, etc.

## Claims

1. Security arrangement (A) for a load carrying, load pulling, load pushing or load stopping assembly (5) for a movable object (4), said security arrangement (A) comprising a carrier plate (1) and an attachment plate (2), wherein said plates (1,2) are arranged with interconnected guiding members (11/12, 20/21), arranged to enable relative movement of said carrier plate (1) in relation to said attachment plate (2) in a longitudinal direction (C) corresponding to the direction of intended movement of said movable object (4), said carrier plate (1) further comprising at least one first attachment device (10) arranged to enable attachment of the security arrangement (A) to a load (6), said attachment plate (2) comprising at least one second attachment device (22) arranged to enable attachment of the security arrangement (A) to said load carrying, load pulling, load pushing or load stopping assembly (5), wherein an energy absorbing member (3) is arranged between said two plates (1, 2) and attached to said two plates (1, 2) by means of first and second attachment members (30, 31) arranged to enable a predetermined relative movement (ΔL) between said carrier plate (1) and said attachment plate (2) parallelly with said longitudinal direction (C) upon simultaneous absorption of energy to reduce the risk of hazard in connection with said object (4) suddenly decelerating, e.g. crashing, that carries, pushes, pulls or stops said load (6).

2. Security arrangement (A) according to claim 1, **characterized in that** said interconnected guiding members (11/12, 20/21) include protruding parts (11,20), preferably rib shaped, which form a gap (G) between the plate shaped parts of said plates (1, 2) that provides space for said energy absorbing member (3).

3. Security arrangement (A) according to claim 1 or 2, wherein said energy absorbing member (3) is in the form of a shaped body that may be prolonged in connection with exercise of a force (Fₘₐₓ) onto the carrier plate (1) that exceeds a predetermined level, wherein preferably said absorbing member (3) includes at least one S-shaped part, more preferred a plurality of S-shaped parts connected to each other along said longitudinal direction (C).

4. Security arrangement (A) according to claim 1,2 or 3, **characterized in that** the predetermined relative movement comprises a maximal prolongation (ΔLₘₐₓ) of said energy absorbing member (3) from its nominal length (L₀) to a maximum length (Lₘₐₓ), wherein said maximal prolongation (ΔLₘₐₓ) is at least 50%, preferably at least 100%, more preferred at least 150%.

5. Security arrangement (A) according to any of claims 1-4, **characterized in that** more than 50% of the energy being absorbed is ductile, i.e. in the form of permanent deformation of said energy absorbing member (3).

6. Security arrangement (A) according to any preceding claim, **characterized in that** said body is shaped to have an increasing energy absorbing effect during prolongation or shortening.

7. Security arrangement (A) according to any preceding claim, **characterized in that** said interconnected guiding members (11/12, 20/21) include first parts (11,20) that hinder relative movement between the plates (1, 2) in first opposite directions in relation to the longitudinal direction (C) and second parts (12,21) that hinder relative movement in second opposite directions in relation to the longitudinal direction (C), wherein said first and second opposite directions are orthogonally oriented in relation to each other.

8. Security arrangement (A) according to any of claims 2-7, **characterized in that**, at least, the main part of the energy absorbing withholding member (3) is positioned in a longitudinal channel space formed between two interconnected guiding members (11/12, 20/21), wherein preferably said channel is formed by parallelly arranged ribs (11, 20).

9. Security arrangement (A) according to claim 8, **characterized in that** the height (g) of said channel space is smaller than the gap (G) between said plates (1, 2).

10. Security arrangement (A) according to claim 8 or 9, **characterized in that** said attachment device (30,32) for attaching the energy absorbing withholding member (3) to the carrier plate (1) is positioned besides the channel portion (1A) of the carrier plate, i.e. in a side portion (1B).

11. A vehicle comprising a security arrangement (A) according to any preceding claim, wherein said vehicle is said object (4).

12. A vehicle according to claim 11, **characterized in that** said vehicle is a car or lorry, wherein said load (6) is pulled or pushed by said vehicle, wherein preferably said load is a trailer.

13. A vehicle according to claim 11, **characterized in that** said vehicle is a car or lorry, wherein said load (6) is carried by said vehicle, preferably on top of the roof of said vehicle.

14. A vehicle according to any of claims 11, 12 or 13, **characterized in that** a plurality of security arrangements (A) are used.

15. A vehicle according to claim 11, **characterized in that** said vehicle is a moveable device in a machine wherein said load (6) is stopped by said load stopping assembly.

## Patentansprüche

1. Sicherheitsvorrichtung (A) für eine Lasttrage-, Lastzieh-, Lastschiebe- oder Laststoppbaugruppe (5) für einen beweglichen Gegenstand (4), wobei die Sicherheitsvorrichtung (A) eine Trägerplatte (1) und eine Befestigungsplatte (2) umfasst, wobei die Platten (1,2) mit miteinander verbundenen Führungselementen (11/12, 20/21) angeordnet sind, die so angeordnet sind, dass sie eine relative Bewegung der Trägerplatte (1) in Bezug auf die Befestigungsplatte (2) in einer Längsrichtung (C) ermöglichen, die der Richtung der vorgesehenen Bewegung des beweglichen Gegenstandes (4) entspricht, wobei die Trägerplatte (1) weiterhin mindestens eine erste Befestigungsvorrichtung (10) umfasst, die angeordnet ist, um die Befestigung der Sicherheitsvorrichtung (A) an einer Last (6) zu ermöglichen, wobei die Befestigungsplatte (2) mindestens eine zweite Befestigungsvorrichtung (22) umfasst, die angeordnet ist, um die Befestigung der Sicherheitsvorrichtung (A) an der besagten Baugruppe (5) zum Lasttragen, zum Lastziehen, zum Lastschieben oder zum Laststopp zu ermöglichen, wobei ein energieabsorbierendes Element (3) zwischen den beiden Platten (1, 2) angeordnet und mit den beiden Platten (1, 2) mittels erster und zweiter Befestigungselemente (30, 31) verbunden ist, das so angeordnet ist, dass eine vorgegebene Relativbewegung (ΔL) zwischen der Trägerplatte (1) und der Befestigungsplatte (2) parallel zu der genannten Längsrichtung (C) ermöglicht wird, bei gleichzeitiger Absorption von Energie zur Verringerung des Gefahrenrisikos im Zusammenhang mit einem plötzlichen Abbremsen, z.B. Zusammenstoß, des Gegenstandes (4), der die Last trägt, schiebt, zieht oder stoppt (6).

2. Sicherheitsvorrichtung (A) nach Anspruch 1, **dadurch gekennzeichnet, dass** die miteinander verbundenen Führungselemente (11/12, 20/21) hervorstehende Teile (11,20), vorzugsweise rippenförmig, umfassen, die einen Spalt (G) zwischen den plattenförmigen Teilen der genannten Platten (1, 2) bilden, der Platz für das energieabsorbierende Element (3) bietet.

3. Sicherheitsvorrichtung (A) nach Anspruch 1 oder 2, wobei das energieabsorbierende Element (3) in Form eines geformten Körpers vorliegt, der im Zusammenhang mit der Ausübung einer Kraft (Fₘₐₓ) auf die Trägerplatte (1) verlängert werden kann, die einen vorgegebenen Wert überschreitet, wobei vorzugsweise das absorbierende Element (3) mindestens einen S-förmigen Teil umfasst, bevorzugt ist eine Mehrzahl von S-förmigen Teilen, die entlang der genannten Längsrichtung (C) miteinander verbunden sind.

4. Sicherheitsvorrichtung (A) nach Anspruch 1, 2 oder 3, **dadurch gekennzeichnet, dass** die vorgegebene Relativbewegung eine maximale Verlängerung (ΔLₘₐₓ) des energieabsorbierenden Elements (3) von seiner Nennlänge (L₀) auf eine maximale Länge (Lₘₐₓ) umfasst, wobei die maximale Verlängerung (ΔLₘₐₓ) mindestens 50%, bevorzugt mindestens 100%, bevorzugter mindestens 150% beträgt.

5. Sicherheitsvorrichtung (A) nach einem der Ansprüche 1-4, **dadurch gekennzeichnet, dass** mehr als 50% der absorbierten Energie duktil ist, d. h. in Form einer dauerhaften Verformung des energieabsorbierenden Elements (3).

6. Sicherheitsvorrichtung (A) nach einem der vorhergehenden Ansprüche, **dadurch gekennzeichnet, dass** der Körper so geformt ist, dass er während der Verlängerung oder Verkürzung eine zunehmende energieabsorbierende Wirkung hat.

7. Sicherungsvorrichtung (A) nach einem der vorhergehenden Ansprüche, **dadurch gekennzeichnet, dass** die miteinander verbundenen Führungsglieder (11/12, 20/21) erste Teile (11,20) umfassen, die eine Relativbewegung zwischen den Platten (1, 2) in erste entgegengesetzte Richtungen in Bezug auf die Längsrichtung (C) behindern, und zweite Teile (12,21), die die Relativbewegung in zweite entgegengesetzte Richtungen in Bezug auf die Längsrichtung (C) behindern, wobei die erste und zweite entgegengesetzte Richtung orthogonal zueinander ausgerichtet sind.

8. Sicherheitsvorrichtung (A) nach einem der Ansprüche 2-7, **dadurch gekennzeichnet, dass** zumindest der Hauptteil des energieabsorbierenden zurückhaltenden Elements (3) in einem Längskanalraum positioniert ist, der zwischen zwei miteinander verbundenen Führungselementen (11/12, 20/21) gebildet ist, wobei der Kanal vorzugsweise durch parallel angeordnete Rippen (11, 20) gebildet wird.

9. Sicherheitsvorrichtung (A) nach Anspruch 8, **dadurch gekennzeichnet, dass** die Höhe (g) des genannten Kanalraums kleiner ist als der Abstand (G) zwischen den genannten Platten (1, 2).

10. Sicherheitsvorrichtung (A) nach Anspruch 8 oder 9, **dadurch gekennzeichnet, dass** die besagte Befestigungsvorrichtung (30,32) zur Befestigung des energieabsorbierenden zurückhaltenden Elements (3) an der Trägerplatte (1) neben dem Kanalabschnitt (1A) der Trägerplatte, d. h. in einem seitlichen Teil (1B) angeordnet ist.

11. Fahrzeug, umfassend eine Sicherungsvorrichtung (A) nach einem der vorhergehenden Ansprüche, wobei das Fahrzeug der Gegenstand (4) ist.

12. Fahrzeug nach Anspruch 11, **dadurch gekennzeichnet, dass** das Fahrzeug ein PKW oder Lastkraftwagen ist, wobei die Ladung (6) von dem Fahrzeug gezogen oder geschoben wird, wobei die Ladung vorzugsweise ein Anhänger ist.

13. Fahrzeug nach Anspruch 11, **dadurch gekennzeichnet, dass** das Fahrzeug ein PKW oder Lastkraftwagen ist, wobei die Last (6) von dem Fahrzeug getragen wird, vorzugsweise auf dem Dach des Fahrzeugs.

14. Fahrzeug nach einem der Ansprüche 11, 12 oder 13, **dadurch gekennzeichnet, dass** mehrere Sicherheitsvorrichtungen (A) verwendet werden.

15. Fahrzeug nach Anspruch 11, **dadurch gekennzeichnet, dass** das Fahrzeug eine bewegliche Vorrichtung in einer Maschine ist, wobei die Last (6) durch die Laststoppbaugruppe gestoppt wird

## Revendications

1. Agencement de sécurité (A) pour un ensemble de transport de charge, de traction de charge, de poussée de charge ou d'arrêt de charge (5) pour un objet mobile (4), ledit agencement de sécurité (A) comprenant une plaque de support (1) et une plaque de fixation (2), dans lequel lesdites plaques (1,2) sont agencées avec des éléments de guidage interconnectés (11/12, 20/21), agencés pour permettre un mouvement relatif de ladite plaque de support (l) par rapport à ladite plaque de fixation (2) dans une direction longitudinale (C) correspondant à la direction de déplacement prévu dudit objet mobile (4), ladite plaque de support (1) comprenant en outre au moins un premier dispositif de fixation (10) agencé pour permettre la fixation du dispositif de sécurité (A) à une charge (6), ladite plaque de fixation (2) comprenant au moins un deuxième dispositif de fixation (22) agencé pour permettre la fixation du dispositif de sécurité (A) audit support de charge, traction de charge, ensemble de poussée de charge ou d'arrêt de charge (5), dans lequel un élément d'absorption d'énergie (3) est agencé entre lesdites deux plaques (1, 2) et fixé auxdites deux plaques (1, 2) au moyen de premier et second éléments de fixation (30,31) agencés pour permettre un mouvement relatif prédéterminé (AL) entre ladique plaque de support (1) et ladite plaque de fixation (2) parallèlement à ladite direction longitudinale (C) lors de l'absorption simultanée d'énergie pour réduire le risque de danger en relation avec ledit objet (4) décélérant brusquement, par exemple d'écrasement, qui porte, pousse , tire ou arrête ladite charge (6).

2. Agencement de sécurité (A) selon la revendication 1, **caractérisé en ce que** lesdits éléments de guidage interconnectés (11/12, 20/21) comprennent des parties en saillie (11, 20), de préférence en forme de nervure, qui forment un espace (G) entre des parties en forme de plaque desdites plaques (1, 2) qui fournissent de l'espace pour ledit élément d'absorption d'énergie (3).

3. Agencement de sécurité (A) selon la revendication 1 ou 2, dans lequel ledit élément d'absorption d'énergie (3) se présente sous la forme d'un corps façonné qui peut être prolongé en liaison avec l'exercice d'une force (Fmax) sur la plaque de support (l) qui dépasse un niveau prédéterminé, dans lequel de préférence ledit élément absorbant (3) comprend au moins une partie en forme de S, de plus grande préférence une pluralité de pièces en forme de S connectées les unes aux autres le long de ladite direction longitudinale (C).

4. Agencement de sécurité (A) selon la revendication 1, 2 ou 3, **caractérisé en ce que** le mouvement relatif prédéterminé comprend un prolongement maximal (ΔLₘₐₓ) dudit élément d'absorption d'énergie (3) depuis sa longueur nominale (Lₒ) jusqu'à une longueur maximale (Lₘₐₓ) ,dans lequel ledit allongement maximal (DLₘₐₓ) est d'au moins 50 %, de préférence d'au moins 100 %, de manière davantage préférée d'au moins 150 %.

5. Agencement de sécurité (A) selon l'une quelconque des revendications 1 à 4, **caractérisé en ce que** plus de 50 % de l'énergie absorbée est ductile, c'est-à-dire sous la forme d'une déformation permanente dudit élément d'absorption d'énergie (3).

6. Agencement de sécurité (A) selon l'une quelconque des revendications précédentes, **caractérisé en ce que** ledit corps est conformé pour avoir un effet d'absorption d'énergie croissant lors de l'allongement ou du raccourcissement.

7. Agencement de sécurité (A) selon l'une quelconque des revendications précédentes, **caractérisé en ce que** lesdits éléments de guidage interconnectés (11/12, 20/21) comprennent des premières parties (11, 20) qui empêchent le mouvement relatif entre les plaques (1, 2) dans des premières positions opposées, directions par rapport à la direction longitudinale (C) et des secondes parties (12, 21) qui empêchent le mouvement relatif dans des secondes directions opposées par rapport à la direction longitudinale (C), dans lequel lesdites premières et secondes directions opposées sont orientées orthogonalement l'une par rapport à l'autre.

8. Agencement de sécurité (A) selon l'une quelconque des revendications 2 à 7, **caractérisé en ce que**, au moins, la partie principale de l'élément de retenue absorbant l'énergie (3) est positionnée dans un espace de canal longitudinal formé entre deux éléments de guidage interconnectés (11/12, 20/21), dans lequel de préférence ledit canal est formé par des nervures disposées parallèlement (11, 20).

9. Agencement de sécurité (A) selon la revendication 8, **caractérisé en ce que** la hauteur (g) dudit espace de canal est inférieure à l'espace (G) entre lesdites plaques (1, 2).

10. Agencement de sécurité (A) selon la revendication 8 ou 9, **caractérisé en ce que** ledit dispositif de fixation (30, 32) pour fixer l'élément de retenue d'absorption d'énergie (3) à la plaque de support (1) est positionnée à côté de la portion de canal (IA) de la plaque de support, c'est-à-dire dans une partie latérale (1B).

11. Véhicule comprenant un agencement de sécurité (A) selon l'une quelconque des revendications précédentes, 5, dans lequel ledit véhicule est ledit objet (4).

12. Véhicule selon la revendication 11, **caractérisé en ce que** ledit véhicule est une voiture ou un camion, dans lequel ladite charge (6) est tirée ou poussée par ledit véhicule, dans lequel de préférence ladite charge est une remorque.

13. Véhicule selon la revendication 11, **caractérisé en ce que** ledit véhicule est une voiture ou un camion, dans lequel ladite charge (6) est portée par ledit véhicule, de préférence sur le toit dudit véhicule.

14. Véhicule selon l'une quelconque des revendications 11, 12 ou 13, **caractérisé en ce que** plusieurs dispositifs de sécurité (A) sont utilisés.

15. Véhicule selon la revendication 11, **caractérisé en ce que** ledit véhicule est un dispositif mobile dans une machine dans laquelle ladite charge (6) est arrêtée par ledit ensemble d'arrêt de charge.
